# NEUE EUROPÄISCHE PATENTSCHRIFT

(11) **EP 2 695 708 B2**
(45) Veröffentlichungstag und Bekanntmachung des Hinweises auf die Entscheidung über den Einspruch: **24.02.2021**
(45) Hinweis auf die Patenterteilung: 02.12.2015
(21) Anmeldenummer: 13173198.6
(22) Anmeldetag: 21.06.2013
(51) Int. Cl.: B25F 5/00

(54) **Elektrisches Handwerkzeug mit diskretem Bedienelement**
Electrical hand tool with discrete operating element
Outil manuel électrique avec élément de commande discret

(30) Priorität: 08.08.2012 DE 102012214030
(43) Veröffentlichungstag der Anmeldung: 12.02.2014
(73) Patentinhaber: Robert Bosch GmbH, 70442 Stuttgart (DE)
(72) Erfinder: Feridouni, Hamed, 70372 Stuttgart (DE); Kynast, Andreas, 70176 Stuttgart (DE)

(56) Entgegenhaltungen:
- EP-A2- 2 431 135
- WO-A1-2010/043244
- DE-A1-102008 003 287
- DE-A1-102008 063 113
- DE-C1- 19 756 857

## Beschreibung

Die Erfindung betrifft ein elektrisches Handwerkzeug mit einem Bedienelement. Insbesondere betrifft die Erfindung ein elektrisches Handwerkzeug mit einem Bedienelement zur Steuerung einer elektrischen Funktion des Handwerkzeugs.

### Stand der Technik

Ein elektrisches Handwerkzeug, beispielsweise ein Schraub- oder Bohrgerät, umfasst einen Elektromotor, um eine Werkzeugaufnahme des Handwerkzeugs in Drehung zu versetzen. Eine Bedienung erfolgt mittels eines oder mehrerer Bedienelemente, von denen eines unter Umständen mehrere Funktionen des Handwerkzeugs beeinflusst. Beispielsweise kann ein erstes Bedienelement eine Laufrichtung des Elektromotors bzw. der Werkzeugaufnahme, ein zweites Bedienelement eine Laufgeschwindigkeit und ein drittes Bedienelement eine Drehmomentbeschränkung steuern, die verhindert, dass das Handwerkzeug ein höheres als ein vorbestimmtes Drehmoment über die Werkzeugaufnahme abgibt.

Ein derartiges Bedienelement umfasst üblicherweise eine Vielzahl elektrischer und mechanischer Komponenten, die in erster Linie dazu eingerichtet sind, einen dem Bedienelement zugeordneten elektrischen Schaltvorgang auszulösen. Im Fall des Bedienelements, das für die Wahl der Laufrichtung des Elektromotors verwendbar ist, kann beispielsweise ein Kreuzschalter zum Umpolen des Elektromotors umfasst sein. Eine Weiterverarbeitung des elektrischen Schaltvorgangs erfolgt üblicherweise mittels einer elektronischen Steuereinrichtung.

Derartige Bedienelemente können in Abhängigkeit einer erforderlichen Bauform, eines Funktionsumfangs und eines Integrationsgrades recht komplex werden, sodass ein Entwicklungs- und Herstellungsaufwand ebenfalls groß sein kann. Eine Lebensdauer eines komplexen Bedienelements kann wegen der großen Anzahl möglicher Schwachstellen gering sein. Ist das Bedienelement hochgradig integriert bzw. miniaturisiert, so ist im Fehlerfall häufig eine Instandsetzung einzelner Bestandteile ausgeschlossen.

Der Erfindung liegt daher die Aufgabe zugrunde, ein elektrisches Handwerkzeug anzugeben, welches ein verbessertes, einfaches Bedienelement umfasst.

Die Erfindung löst diese Aufgabe mittels eines Handwerkzeugs mit den Merkmalen des unabhängigen Anspruchs. Unteransprüche geben bevorzugte Ausführungsformen wieder.

### Offenbarung der Erfindung

Ein erfindungsgemäßes elektrisches Handwerkzeug umfasst einen elektrischen Verbraucher, ein Bedienelement mit einem ersten beweglichen Element zur Betätigung durch einen Benutzer und mit einem zweiten beweglichen Element und eine Steuereinrichtung zur Steuerung eines Stromflusses zwischen dem Energiespeicher und dem Verbraucher auf der Basis einer Stellung des ersten und des zweiten beweglichen Elements. Das zweite bewegliche Element ist dazu eingerichtet, eine andere Funktion des Handwerkzeugs bzw. eine Drehgeschwindigkeit des elektrischen Verbrauchers, insbesondere des Elektromotors, zu steuern. Dabei ist die Steuereinrichtung vom Bedienelement getrennt aufgebaut und eine Umsetzung der Stellung des beweglichen Elements in ein elektrisches Steuersignal findet in der Steuereinrichtung statt.

Erfindungsgemäß ist das erste bewegliche Element dazu eingerichtet, eine Drehrichtung des Verbrauchers, insbesondere des Elektromotors, zu steuern, wobei die Umsetzung des mechanischen Stellung des Bedienelements in ein Steuersignal zur Ansteuerung von elektronischen Baugruppen der Steuereinrichtung durch eine speziell vorgesehene Abtasteinrichtung der Steuereinrichtung durchgeführt wird.

Erfindungsgemäß ist es möglich, die Bedienfunktion, die sich dem Benutzer darbietet, von der elektrischen Schaltfunktion, die einen Betriebszustand des Handwerkzeugs steuert, konstruktiv zu trennen. Dadurch kann das erste und zweite bewegliche Element in verbesserter Weise zur Erzeugung einer haptischen Rückmeldung an den Benutzer ausgelegt werden, sodass die Bedienbarkeit des Handwerkzeugs auch ohne optische oder akustische Interaktion verbessert sein kann.

In einer Ausführungsform ist das erste bewegliche Element dazu eingerichtet, eine vorbestimmte Bedienkraft für eine Änderung seiner Stellung zu erfordern. Vorteilhafterweise ist die solchermaßen erforderliche Kraft unabhängig von einer Kraft, die zur Generierung entsprechender elektrischer Steuersignale erforderlich ist.

Anders ausgedrückt kann das erste bewegliche Element bezüglich seiner Bedienkraft vollständig auf die haptischen Bedürfnisse des Benutzers ausgelegt sein, ohne elektrische Aspekte oder Aspekte der Umsetzung einer mechanischen Stellung in ein elektrisches Steuersignal bzw. ein mechanisches Verhalten einer elektrischen Komponente, insbesondere eines Schalters, berücksichtigen zu müssen. Umgekehrt kann die Steuereinrichtung, die die mechanische Bewegung des ersten beweglichen Elements abtastet und auf der Basis der Abtastung den Strom durch den Verbraucher steuert, unabhängig von den Bedienkräften dimensioniert werden, die der Benutzer zur Bewegung des Bedienelements aufbringen muss. Ist beispielsweise nur ein Miniaturschalter geringer oder geringster elektrischer Leistung zu betätigen, so kann dieser klein und leicht ausgelegt werden, während ein mechanischer Mechanismus, der Betätigungskräfte für den Benutzer am ersten beweglichen Element steuert, davon unabhängig kräftig dimensioniert sein kann.

In einer bevorzugten Ausführungsform umfasst das Bedienelement einen Rastmechanismus, der dazu eingerichtet ist, einer Bewegung des ersten beweglichen Elements zwischen vorbestimmten Positionen entgegenzuwirken.

So kann eine unbeabsichtigte Betätigung des ersten beweglichen Elements weniger wahrscheinlich gemacht werden. Eine entsprechende Funktion muss seitens der Steuereinrichtung nicht erneut implementiert werden, sodass an dieser Stelle ein besonders einfaches und gegebenenfalls direktes Element zur Umsetzung der Stellung des zweiten beweglichen Elements in ein elektrisches Signal verwendet werden kann.

Der Rastmechanismus kann dazu eingerichtet sein, bei einer Bewegung des ersten beweglichen Elements in eine der vorbestimmten Positionen ein vorbestimmtes Geräusch mechanisch zu erzeugen. Das Geräusch kann akustisch oder auch haptisch via Körperschall durch den Benutzer wahrnehmbar sein. So kann die haptische Rückmeldung des ersten beweglichen Elements an den Benutzer weiter zielgerichtet an dessen Bedürfnisse angepasst werden, ohne Gegebenheiten des Handwerkzeugs und speziell der Steuereinrichtung berücksichtigen zu müssen.

In einer besonders bevorzugten Ausführungsform umfasst das Bedienelement ein zweites bewegliches Element zur Bedienung durch einen Benutzer und die Beweglichkeit des zweiten beweglichen Elements ist unterbunden, solange sich das erste bewegliche Element in einer vorbestimmten Position des Rastmechanismus befindet. So kann eine Verriegelung eines Zustands bzw. einer Stellung des zweiten beweglichen Elements erfolgen. Insbesondere kann dieser Zustand einem deaktivierten Handwerkzeug entsprechen, sodass eine unbeabsichtigte Inbetriebnahme des Handwerkzeugs, beispielsweise beim Transport oder auch während des Hantierens, vermieden werden kann.

Das zweite bewegliche Element kann einen elektrischen Kontakt zur Bereitstellung eines elektrischen Signals, das auf seine Stellung hinweist, umfassen. Die durch das zweite bewegliche Element gesteuerte Funktion des Handwerkzeugs kann eine einfacher zu handhabende taktile Rückmeldung erfordern. Insbesondere kann das zweite bewegliche Element analog bedienbar sein und ein Potentiometer zur Bereitstellung eines elektrischen Signals umfassen.

Das erste bewegliche Element kann Verbindungselemente zur formschlüssigen Anbringung des zweite beweglichen Elements umfassen. So können das erste bewegliche Element und das zweite bewegliche Element leicht zum Bedienelement zusammen gefügt werden.

Das erste bewegliche Element kann um eine Achse herum drehbar sein. Dabei kann die Achse leicht so dimensioniert werden, dass auch außergewöhnlich große Bedienkräfte durch den Benutzer sicher aufgenommen werden, ohne diese Kräfte in die Steuereinrichtung einleiten zu müssen.

In einer besonders bevorzugten Ausführungsform umfasst der Verbraucher einen Elektromotor und das erste bewegliche Element ist dazu eingerichtet, eine Drehrichtung des Elektromotors zu steuern. In dieser Ausführungsform kann besonders gut bei der Betätigung des ersten beweglichen Elements eine haptische Rückmeldung, beispielsweise in Form eines satten Ruckens, Rastens oder Umspringens gegeben werden, ohne diese Rückmeldung in Verbindung mit mechanischen Elementen der Steuereinrichtung generieren zu müssen.

In einer Ausführungsform umfasst das erste bewegliche Element Verbindungselemente zur formschlüssigen Anbringung der Steuereinrichtung. Die Steuereinrichtung kann in einer einfachen Ausführungsform durch einen oder mehrere Schalter realisiert sein.

In einer anderen Ausführungsform kann eine komplexere Steuereinrichtung verwendet werden, die insbesondere eine differenziertere Auswertung der Stellung des ersten beweglichen Elements erlauben kann. Durch die Separation des Bedienelements von der Steuereinrichtung können einander entsprechende Bedienelemente an unterschiedlichen Steuereinrichtungen und gegebenenfalls an unterschiedlichen Handwerkzeugen eingesetzt werden, sodass die haptische Rückmeldung an den Benutzer über unterschiedliche Gerätevarianten gleich bleiben kann. Umgekehrt ist es auch möglich, ein Handwerkzeug alternativ mit unterschiedlichen Bedienelementen auszustatten, etwa um unterschiedliche Marktvorgaben bezüglich unterschiedlichen Betätigungskräften von Benutzern aus unterschiedlichen Kulturkreisen zu berücksichtigen.

Die Erfindung wird nun mit Bezug auf die beigefügten Figuren genauer beschrieben, in denen:
- Fig. 1 ein elektrisches Handwerkzeug;
- Fig. 2 ein Bedienelement für das Handwerkzeug aus Fig. 1;
- Fig. 3 das Bedienelement aus Fig. 2 in einer anderen Perspektive, und
- Fig. 4 ein Kraft-Weg-Diagramm des Bedienelements einer der Figuren 1 bis 3 darstellt.

### Genaue Beschreibung von Ausführungsbeispielen

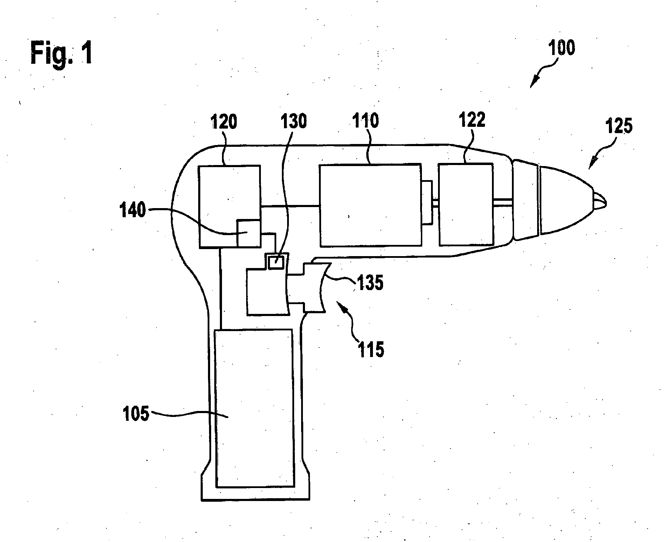

Fig. 1 zeigt ein elektrisches Handwerkzeug 100. Das Handwerkzeug 100 umfasst einen Energiespeicher 105, einen elektrischen Verbraucher 110, ein Bedienelement 115 und eine Steuereinrichtung 120. In der dargestellten, beispielhaften Ausführungsform handelt es sich beim elektrischen Handwerkzeug 100 um einen Akkuschrauber bzw. Akkubohrer. Der Verbraucher 110 umfasst einen Elektromotor, der über ein Getriebe 122 mit einer mechanischen Werkzeugaufnahme 125 gekoppelt ist. Die Werkzeugaufnahme 125 ist insbesondere zur Aufnahme eines Bohrers, Fräsers oder Schraubwerkzeugs eingerichtet.

Das Bedienelement 115 umfasst wenigstens ein erstes bewegliches Element 130. In der dargestellten, optionalen Ausführungsform ist auch noch ein zweites bewegliches Element 135 vorgesehen. Die Operation des Verbrauchers 110 ist steuerbar durch die Steuereinrichtung 120, die einen Stromfluss zwischen dem Energiespeicher 105 und dem Verbraucher 110 steuert. Diese Steuerung ist abhängig von einer Stellung des ersten beweglichen Elements 130. Das zweite bewegliche Element kann dazu eingerichtet sein, eine andere Funktion des Handwerkzeugs 100 zu steuern.

Das erste bewegliche Element 130 ist durch einen Benutzer des Handwerkzeugs 100 beweglich. Insbesondere kann das bewegliche Element 130 entlang einer Bewegungsrichtung verschiebbar oder um eine Bewegungsachse drehbar bzw. schwingbar sein. Wie unten noch genauer ausgeführt wird, ist das Bedienelement 115 vorzugsweise dazu eingerichtet, die Bewegung des beweglichen Elements 130 so zu ermöglichen, dass Betätigungs- und Widerstandskräfte, Betätigungswege oder mit Betätigungen verbundene Geräusche dazu geeignet sind, eine haptische und gegebenenfalls auch eine akustische Rückmeldung zu einem Bedienvorgang zu vermitteln. Entsprechendes gilt für das zweite bewegliche Element 135, wobei die Elemente 130 und 135 unterschiedliche Aspekte des Stromflusses zwischen dem Energiespeicher 105 und dem Verbraucher 110 steuern können, und dementsprechend dazu eingerichtet sein können, unterschiedliche haptische Rückmeldungen an einen Benutzer zu geben. In der dargestellten Ausführungsform kann das erste bewegliche Element 130 beispielsweise eine Drehrichtung des Elektromotors 110 und das zweite bewegliche Element 135 eine Drehgeschwindigkeit des Elektromotors 110 steuern.

Es ist essenziell, dass die Steuereinrichtung 120 separat vom Bedienelement 115 aufgebaut ist. Das bedeutet, dass das Bedienelement 115 ein vollständig mechanisches Bauteil sein kann, welches keine unmittelbar abgetasteten elektrischen Eigenschaften wie einen Widerstand oder eine Schaltfunktion umfasst. Stattdessen erfolgt die Umsetzung der durch das Bedienelement 115 bereitgestellten Stellung bzw. Bewegung in ein elektrisches Signal durch die Steuereinrichtung 120.

In einer einfachen Ausführungsform kann die Steuereinrichtung 120 lediglich einen Schalter umfassen, der durch das Bedienelement 115 betätigt werden kann. In einer anderen Ausführungsform kann die Steuereinrichtung 120 beispielsweise eine differenzierte elektronische Steuereinrichtung umfassen, wobei die Umsetzung der mechanischen Stellung des Bedienelements 115 in ein Steuersignal zur Ansteuerung von elektronischen Baugruppen der Steuereinrichtung 120 durch eine speziell hierfür vorgesehene Abtasteinrichtung 140 der Steuereinrichtung 120 durchgeführt wird. Die Abtasteinrichtung 140 kann beispielsweise einen Mikroschalter, einen Federkontakt, einen Schiebeschalter, einen Reed-Kontakt, einen Hall-Sensor, eine Lichtschranke oder eine andere geeignete Einrichtung zur Abtastung des Bedienelements 115 umfassen.

In einer Ausführungsform können die elektrischen Elemente zur Umsetzung der Stellung des zweiten beweglichen Elements 135 in ein elektrisches Signal bzw. eine elektrisch abtastbare Eigenschaft vom Bedienelement 115, insbesondere vom zweiten beweglichen Element 135 umfasst sein.

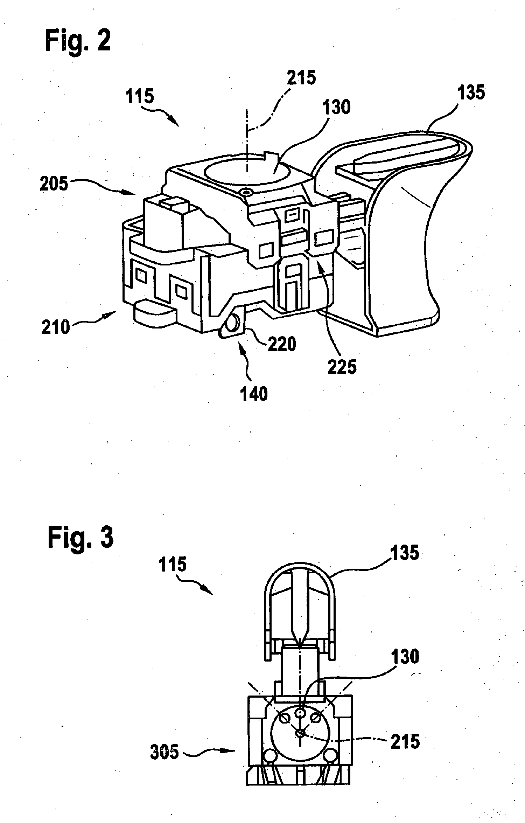

Fig. 2 zeigt das Bedienelement 115 für das Handwerkzeug 100 aus Fig. 1 in einer beispielhaften Ausführungsform. In der Darstellung von Fig. 2 ist das Bedienelement 115 aus einem oberen Abschnitt 205 und einem unteren Abschnitt 210 zusammensetzbar, wobei bevorzugterweise eine Rastverbindung, insbesondere eine lösbare Rastverbindung, eingesetzt wird. Der obere Abschnitt 205 umfasst das erste bewegliche Element 130 und kann noch eine Anzahl weiterer Elemente umfassen, die eine Beweglichkeit des ersten Elements 130 im oberen Abschnitt 205 sicherstellen bzw. definieren. Solche Elemente können insbesondere eine Feder, eine durch die Feder belastete Kugel, einen Hebel oder eine Achse umfassen. In der dargestellten Ausführungsform ist eine Drehachse 215 vorgesehen, um die das erste Element 130 herum beweglich ist.

Der untere Abschnitt 210 umfasst das zweite bewegliche Element 135 sowie optional Elemente, um die Beweglichkeit des zweiten Elements 135 und/oder die Beweglichkeitscharakteristik festzulegen. In der dargestellten, bevorzugten Ausführungsform ist zusätzlich ein Schalter oder Potentiometer eingebaut, wobei ein elektrischer Anschluss 220 zur elektrischen Kontaktierung solcher Komponenten vorgesehen ist. Für die Bedienbarkeit des oberen Abschnitts 205 ist der untere Abschnitt 210 und insbesondere das Vorhandensein der Abtasteinrichtung 140 nicht erforderlich.

Der obere Abschnitt 205 und der untere Abschnitt 210 sind vorzugsweise aneinander anbringbar. Hierzu ist in der dargestellten Ausführungsform eine Schnappverbindung 225 vorgesehen.

Fig. 3 zeigt das Bedienelement 115 aus Fig. 2 in einer Perspektive von oben. In der dargestellten Ausführungsform ist ein Verbindungselement 305 zur Verbindung der Steuereinrichtung 120 bzw. ihrer Abtasteinrichtung 140 am Bedienelement 115 vorgesehen.

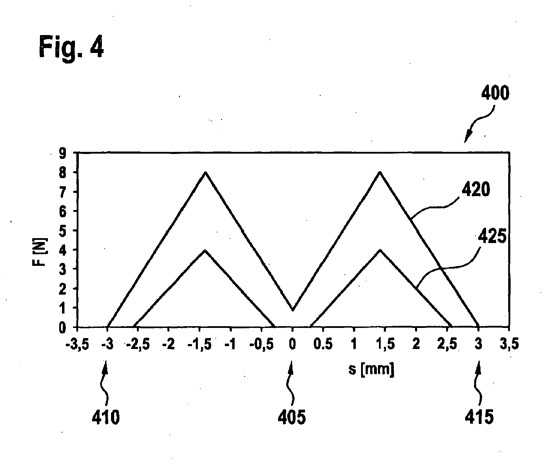

Fig. 4 zeigt ein Kraft-Weg-Diagramm 400 des Bedienelements 115 einer der Figuren 1 bis 3. Das Diagramm 400 betrifft einen Umfangsweg des ersten beweglichen Elements 130 um seine zugeordnete Drehachse 215. In horizontaler Richtung ist dieser Weg s angetragen, während in vertikaler Richtung die dazugehörige Kraft angetragen ist. Die angegebenen Einheiten sind rein exemplarisch.

Bei einem Weg s von 0 mm befindet sich das bewegliche Element 130 in einer Mittelstellung. Hier kann die Beweglichkeit des zweiten Elements 135 mechanisch verhindert, begrenzt oder erschwert sein. Diese Position des ersten beweglichen Elements 130 wird daher auch Verriegelungsstellung 405 genannt. In der Stellung -3 mm befindet sich eine linke Laufstellung 410, bei einer Stellung von +3 mm eine rechte Laufstellung 415. Die Laufstellungen 410, 415 korrespondieren zu einer linken bzw. rechten Rotationsrichtung des Elektromotors 110 des beispielhaften Handwerkzeugs 100 aus Fig. 1.

Ein erster Verlauf 420 zeigt einen Zusammenhang zwischen dem Weg s und der Kraft. Ein zweiter Verlauf 425 zeigt eine maximale Abweichung vom ersten Verlauf 420. Es ist zu sehen, dass der erste Verlauf 420 entlang des Wegs s symmetrisch zur Verriegelungsstellung 405 ausgebildet ist. Um von der Verriegelungsstellung 405 in eine der Laufstellungen 410, 415 zu gelangen, muss eine Betätigungskraft aufgebracht werden, die sich mit steigender Auslenkung von der Verriegelungsstellung 405 bis auf im vorliegenden Beispiel 8 N steigert. Von dort fällt die Betätigungskraft wieder ab, um an der entsprechenden Laufstellung 410, 415 ca. 0 N zu erreichen.

## Patentansprüche

1. Elektrisches Handwerkzeug (100), umfassend:
- einen elektrischen Verbraucher (110), insbesondere einen Elektromotor (110);
- ein Bedienelement (115) mit einem ersten beweglichen Element (130) zur Betätigung durch einen Benutzer und mit einem zweiten beweglichen Element (135), und
- eine Steuereinrichtung (120) zur Steuerung eines Stromflusses durch den Verbraucher (110) auf der Basis einer Stellung des ersten und des zweiten beweglichen Elements (130, 135), wobei das zweite bewegliche Element (135) dazu eingerichtet ist, eine andere Funktion des Handwerkzeugs bzw. eine Drehgeschwindigkeit des elektrischen Verbrauchers, insbesondere des Elektromotors (110), zu steuern,
wobei
- die Steuereinrichtung (120) vom Bedienelement (115) getrennt aufgebaut ist und eine Umsetzung der Stellung des ersten beweglichen Elements (130) in ein elektrisches Signal in der Steuereinrichtung (120) stattfindet, wobei das erste bewegliche Element (130) dazu eingerichtet ist, eine Drehrichtung des Verbrauchers, insbesondere des Elektromotors (110), zu steuern, wobei die Umsetzung der mechanischen Stellung des Bedienelements (115) in ein Steuersignal zur Ansteuerung von elektronischen Baugruppen der Steuereinrichtung (120) durch eine speziell vorgesehene Abtasteinrichtung (140) der Steuereinrichtung (120) durchgeführt wird.

2. Handwerkzeug (100) nach Anspruch 1, wobei das erste bewegliche Element (130) dazu eingerichtet ist, eine vorbestimmte Bedienkraft für eine Änderung seiner Stellung zu erfordern.

3. Handwerkzeug (100) nach Anspruch 1 oder 2, wobei das Bedienelement (115) einen Rastmechanismus umfasst, der dazu eingerichtet ist, einer Bewegung des ersten beweglichen Elements (130) zwischen vorbestimmten Stellungen (405-415) entgegen zu wirken.

4. Handwerkzeug (100) nach Anspruch 3, wobei der Rastmechanismus dazu eingerichtet ist, bei einer Bewegung des ersten beweglichen Elements (130) in eine der vorbestimmten Stellungen (405-415) ein vorbestimmtes Geräusch mechanisch zu erzeugen.

5. Handwerkzeug (100) nach Anspruch 3 oder 4, wobei das Bedienelement (115) ein zweites bewegliches Element (135) zur Bedienung durch einen Benutzer umfasst und die Beweglichkeit des zweiten Elements (135) unterbunden ist, solange sich das erste Element (130) in einer vorbestimmten Stellung (405) des Rastmechanismus befindet.

6. Handwerkzeug (100) nach Anspruch 5, wobei das zweite bewegliche Element einen elektrischen Kontakt (220) zur Bereitstellung eines elektrischen Signals, das auf seine Stellung hinweist, umfasst.

7. Handwerkzeug (100) nach Anspruch 5 oder 6, wobei das erste bewegliche Element (130) Verbindungselemente (225) zur formschlüssigen Anbringung des zweiten beweglichen Elements (135) umfasst.

8. Handwerkzeug (100) nach einem der vorangehenden Ansprüche, wobei das erste bewegliche Element (130) um eine Achse (215) herum drehbar ist.

## Claims

1. Electric handheld power tool (100) comprising:
- an electrical load (110), in particular an electric motor (110);
- an operator control element (115) with a first moving element (130) to be operated by a user and with a second moving element (135), and
- a control device (120) for controlling a flow of current through the load (110) on the basis of a position of the first and the second moving element (130, 135), wherein the second moving element (135) is designed to control another function of the handheld tool or a rotation speed of the electrical load, in particular the electric motor (110),
wherein
- the control device (120) is constructed separately from the operator control element (115), and a conversion of the position of the first moving element (130) into an electrical signal takes place in the control device (120), wherein the first moving element (130) is designed to control a rotation direction of the load, in particular the electric motor (110), wherein the conversion of the mechanical position of the operator control element (115) into a control signal for driving electronic assemblies of the control device (120) is carried out by a specially provided scanning device (140) of the control device (120).

2. Handheld power tool (100) according to Claim 1, wherein the first moving element (130) is designed to require a predetermined operator control force in order to change its position.

3. Handheld power tool (100) according to Claim 1 or 2, wherein the operator control element (115) comprises a latching mechanism which is designed to counteract a movement of the first moving element (130) between predetermined positions (405-415).

4. Handheld power tool (100) according to Claim 3, wherein the latching mechanism is designed to mechanically generate a predetermined noise when the first moving element (130) moves to one of the predetermined positions (405-415).

5. Handheld power tool (100) according to Claim 3 or 4, wherein the operator control element (115) comprises a second moving element (135) to be operated by a user, and the ability of the second element (135) to move is suppressed as long as the first element (130) is in a predetermined position (405) of the latching mechanism.

6. Handheld power tool (100) according to Claim 5, wherein the second moving element comprises an electrical contact (220) for providing an electrical signal which indicates its position.

7. Handheld power tool (100) according to Claim 5 or 6, wherein the first moving element (130) comprises connecting elements (225) for attaching the second moving element (135) in an interlocking manner.

8. Handheld power tool (100) according to one of the preceding claims, wherein the first moving element (130) can be rotated about an axis (215).

## Revendications

1. Outil manuel électrique (100), comprenant :
- un récepteur électrique (110), en particulier un moteur électrique (110) ;
- un élément de commande (115) doté d'un premier élément mobile (130) pour l'actionnement par un utilisateur et d'un deuxième élément mobile (135), et
- un dispositif de commande (120) pour commander un débit de courant traversant le récepteur (110) sur la base d'une position du premier et du deuxième élément mobile (130, 135), le deuxième élément mobile (135) étant prévu pour commander une autre fonction de l'outil manuel ou une vitesse de rotation du récepteur électrique, en particulier du moteur électrique (110),
- le dispositif de commande (120) étant construit de façon séparée de l'élément de commande (115) et une conversion de la position du premier élément mobile (130) en un signal électrique se produisant dans le dispositif de commande (120), le premier élément mobile (130) étant prévu pour commander un sens de rotation du récepteur, en particulier du moteur électrique (110), la conversion de la position mécanique de l'élément de commande (115) en un signal de commande pour commander des modules électroniques du dispositif de commande (120) étant effectuée par un dispositif de balayage (140) du dispositif de commande (120) prévu spécialement.

2. Outil manuel (100) selon la revendication 1, le premier élément mobile (130) étant conçu pour requérir une force de commande prédéfinie pour modifier sa position.

3. Outil manuel (100) selon la revendication 1 ou 2, l'élément de commande (115) comprenant un mécanisme d'arrêt conçu pour contrer un mouvement du premier élément mobile (130) entre des positions prédéfinies (405-415).

4. Outil manuel (100) selon la revendication 3, le mécanisme d'arrêt étant conçu pour produire mécaniquement un bruit prédéfini en cas de mouvement de l'élément mobile (130) dans une des positions prédéfinies (405-415).

5. Outil manuel (100) selon la revendication 3 ou 4, l'élément de commande (115) comprenant un deuxième élément mobile (135) pour l'utilisation par un utilisateur et la mobilité du deuxième élément (135) étant empêchée dès que le premier élément (130) se trouve dans une position prédéfinie (405) du mécanisme d'arrêt.

6. Outil manuel (100) selon la revendication 5, le deuxième élément mobile comprenant un contact électrique (220) servant à mettre à disposition un signal électrique indiquant sa position.

7. Outil manuel électrique (100) selon la revendication 5 ou 6, le premier élément mobile (130) comprenant des éléments de liaison (225) pour le placement par complémentarité de formes du deuxième élément mobile (135).

8. Outil manuel (100) selon l'une quelconque des revendications précédentes, le premier élément mobile (130) pouvant pivoter autour d'un axe (215).
